# EUROPEAN PATENT SPECIFICATION

(11) **EP 0 672 231 B1**
(45) Date of publication and mention of the grant of the patent: **03.03.1999**
(21) Application number: 94900851.0
(22) Date of filing: 03.12.1993
(51) Int. Cl.: F24D 9/00, F24F 5/00

(54) **METHOD AND ARRANGEMENT FOR AIR-CONDITIONING AND HEATING ROOM SPACE**
VERFAHREN UND VORRICHTUNG ZUR KLIMATISIERUNG UND RAUMHEIZUNG
PROCEDE ET SYSTEME DE CLIMATISATION ET DE CHAUFFAGE POUR ESPACES INTERIEURS

(30) Priority: 08.12.1992 FI 925573
(43) Date of publication of application: 20.09.1995
(73) Proprietor: ABB FLÄKT OY, SF-00600 Helsinki (FI)
(72) Inventor: LESKINEN, Seppo, (FI); ROLIN, Ingmar, FIN-02730 Espoo (FI)
(74) Representative: Füchsle, Klaus, Dipl.-Ing.
(86) International application number: FI9300523
(87) International publication number: WO9414011

(56) References cited:
- EP-A- 431 760
- WO-A-93/10403
- WO-A-93/18350
- FI-B- 73 067
- FI-B- 81 440
- GB-A- 749 574
- SE-B- 372 620
- SE-B- 458 231
- US-A- 5 031 515

## Description

The invention concerns a method for air-conditioning and heating room space, air being sucked from room space and conducted through heating and cooling radiators to an intake air blower, by which the air is blown back into the room space. The invention also concerns an arrangement for air-conditioning and heating room space.

To save energy, it is nowadays common to let the room temperature drop in business premises, offices, factories and in other similar space during the heating period at night, weekends or at other times when the building is not in use. The air-conditioning system is then either entirely out of use or is used at very low capacity.

Two or three hours before people arrive, the heating system is switched on at full capacity and the temperature of the building starts to rise. The air-conditioning system starts to operate simultaneously by return air: air is sucked from the room space, conducted through a duct provided with a return air damper to a heating radiator and blown through an inlet duct back into the room space of the building. In other words, air is recycled at this point. The heat recovery means of the air-conditioning system of the building are not yet in operation, i.e. no air flows through said means.

The air to be circulated is to be heated in the heating radiator to as high a temperature as possible, usually to about 35-40°C. Since at this point the temperature in the building is usually 16-19°C and the radiator has a limited heat delivery surface, the valve on the liquid side of the radiator is in an entirely open state and the temperature of the return water is at least 55-65°C. Since the heating system concurrently operates at maximum capacity with a maximum amount of water at a temperature that is below the normal room temperature, the load peak is reached during morning heating, which shows clearly in the measurements of the district heating plants. The entire district heating network is in fact designed according to this load peak, in respect of both the consumption and especially the flow of water. The flow of water is of primary importance when a network is designed. In the above situation, the temperature of the return water is above the normal temperature, which reduces the power transfer capacity of the district heating network and the efficiency of the boiler.

Finnish Patent Application 921,034 teaches that the temperature of district heating water can be dropped and the power transfer capacity of the network improved by connecting the heat transfer system of the building in series with the heat exchanger of the air-conditioning system. However, in the above arrangement this is of no use unless the heating radiator is simultaneously designed to be five to ten times larger than normally. In normal use, this kind of radiator would no longer be adjustable. A radiator of this size would incur so high costs that the costs would exceed the savings achieved with the design of the district heating network. In normal use of the plant, the radiator would also cause a great resistance of flow, thereby considerably increasing power consumption in the system, both on the air and liquid sides.

Examples for other known solutions include the heating pump solution of Finnish Patent 81,440, and the special solution of Finnish Patent 73,067 for air-conditioning a space having a high humidity. The disadvantage of these solutions is that their efficiency cannot be increased by any kind of circulation of air.

The aim of the invention is to provide a method and arrangement by which the disadvantages of the prior art can be eliminated. This is achieved with the method of the invention, which is characterised in that at least part of the air sucked from the room is first conducted through an air outlet radiator or an air inlet radiator of a heat recovery means, or through both when connected in series, and then to the heating and cooling radiators, and that heating or cooling power is supplied to the circuit for liquid circulation in the heat recovery means. The arrangement of the invention is characterised in that it comprises a second duct portion arranged to connect the outlet of the radiator on the outlet side of the heat recovery means with the inlet of the radiator on the inlet side, and to allow the air sucked from the room space, or at least part of the air, to flow through said radiators in series before the air is conducted to the radiators for heating and cooling the air to be blown in, and that the second duct portion is provided with a morning heating damper, by which the duct can be closed if desired.

The primary advantage of the invention is that air can be heated to a much higher temperature than at present, which shortens the time needed to heat the building before people arrive. However, the temperature of the return water can be kept lower than at present, at a temperature corresponding to the normal temperature, i.e. at about 40-50°C.

Alternatively, it is possible to heat the return air to the present level, i.e. to about 35-40°C, but to drop the temperature of the return water conducted from the district heating network to 20-35°C. This entirely eliminates the load peak caused by morning heating. The power transfer capacity of the district heating network is considerably improved and/or the investments needed are significantly reduced in regard to the prior art.

The above advantages can naturally also be combined: the temperature of the return air is slightly raised while the temperature of the return water conducted from the district heating network is dropped to some extent, e.g. to 35°C.

All the above advantages are achieved without significantly adding to the costs and without increasing the flow resistance and power consumption in the air-conditioning system. Also, in normal use the system can be easily adjusted.

For reasons of clarity, only district heating is mentioned above. The same advantages naturally also apply to all other apparatuses and piping used for producing and transferring thermal energy both inside and outside a building, and thus the invention also relates to them.

In the following the invention will be described in greater detail by means of embodiments illustrated in the attached drawing, wherein
Fig. 1 shows a general schematic view of a known air-conditioning apparatus,
Fig. 2 shows a general schematic view of a first embodiment of the arrangement according to the invention,
Fig. 3 shows a general schematic view of a second embodiment of the arrangement according to the invention, and
Fig. 4 shows a general schematic view of a third embodiment of the arrangement according to the invention.

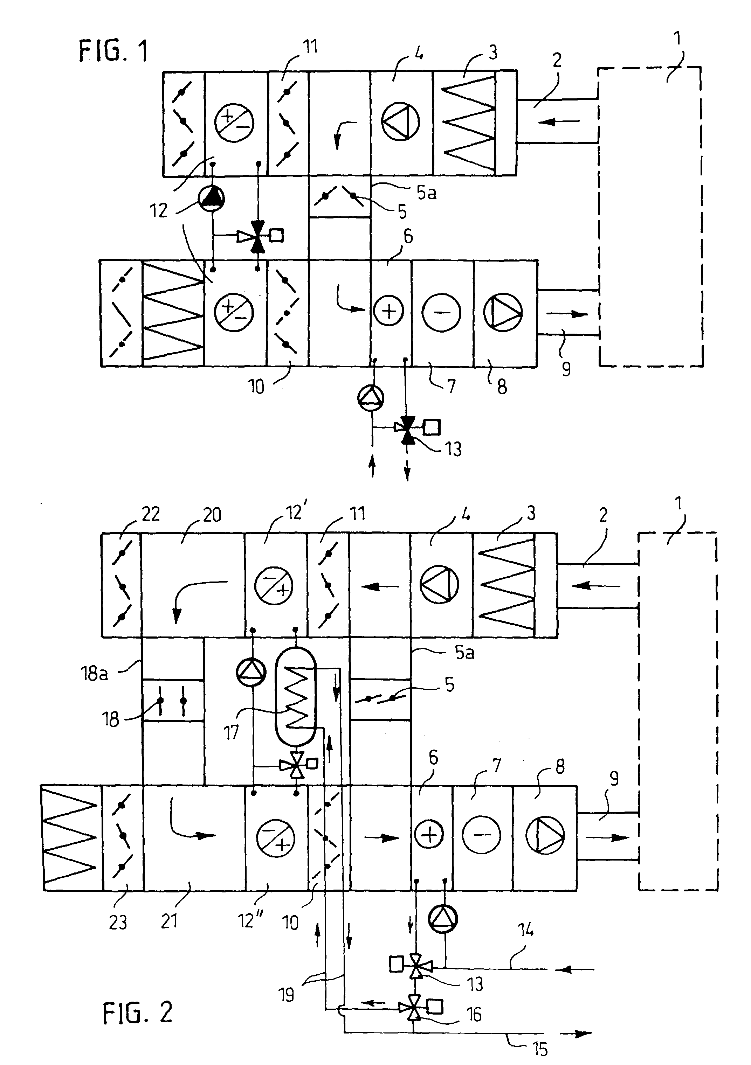

Fig. 1 shows an air-conditioning apparatus according to the prior art. The apparatus operates in the following manner. As stated above, a couple of hours before people arrive the heating system is switched on at full capacity and the temperature of the building starts to rise. This also activates the air-conditioning system of Fig. 1: a blower 4 sucks air from a room space 1 through an outlet duct 2 and an outlet filter 3. The air is conducted through a first duct portion 5a to heating and cooling radiators 6, 7 and further to an air inlet blower 8. The first duct portion 5a is provided with a return air damper 5, which is at this point in an entirely open state, allowing the air to flow through the first duct portion 5a. The air inlet blower 8 blows the air through an air inlet duct 9 back into the room space 1. At this point, air outlet and inlet dampers 10, 11 are in a closed state, and heat recovery means 12 are not in use. The flow of air is shown in Fig. 1 by arrows. Heat is conducted through a valve 13 to the radiator 6 by a circulating heat carrier, such as water.

The air is to be heated in the radiator 6 to as high a temperature as possible. However, the limited heat delivery surface of the radiator 6 raises problems, as mentioned earlier.

Fig. 2 shows one advantageous embodiment of the arrangement according to the invention. In Fig. 2, the same reference numerals are used as in Fig. 1 where appropriate. The invention is based on the idea that during morning heating, the great power transfer capacity of the heat recovery means is utilized by conducting air from the outlet blower 4 first through the radiators 12 and 12' of the heat recovery means and then to the heating radiator 6, and by connecting the heat recovery means with the heating system of the air-conditioning. This produces a free counter-current heat exchanger, which has a power transfer capacity almost ten times as great as that of the heating radiator.

The great power transfer capacity makes it possible to connect in series the heating circuit of the air-conditioning system of the building in such a way that the heat carrier emits heat first to the heating system and then to the air-conditioning system. The temperature of the return water conducted from the heating system can thus be kept high, and a great heating effect can be achieved. Despite this, the temperature of the return water conducted from the air-conditioning system to the district heating network can be kept low, at about 25°C if desired, and the load peak, which is uneconomic in respect of the design of the district heating network, can be entirely eliminated.

The essential feature of the method according to the invention is that at least part of the air sucked from the room 1 is first conducted through the air outlet radiator 12' or air inlet radiator 12", or through both when connected in series, and then to the heating and cooling radiators 6, 7. According to the basic idea of the invention, it is possible to utilize the existing heat exchange capacity of the system - i.e. the radiators of the heat recovery means - either entirely or in part, according to the need. As regards the arrangement described in Fig. 2, in which the above method is used, it is an essential feature of the arrangement that it comprises a second duct portion 18a arranged to connect the outlet side of the heat recovery means with the outlet side of the radiator 12' and the inlet side with the inlet side of the radiator 12", and to allow the air sucked from the room space 1 or at least part of said air to flow through the above radiators in succession before it is conducted to the radiators 6, 7 for heating and cooling the air to be blown in, and that the second duct portion 18a is provided with a morning heating damper 18, by which said duct can be closed if so desired.

It is to be understood that the embodiment of Fig. 2 can be modified: if desired, air can be conducted e.g. past the radiator 12" directly to the radiator 6, in which case only one of the radiators of the heat recovery means is used. Correspondingly, air can be conducted past the radiator 12' to the radiator 12" and further to the radiator 6, etc.

In the embodiment of Fig. 2, air is removed from the room space 1 by the blower 4 through the duct 2 and the filter 3. However, the air is not conducted back through the return air damper 5 but said damper is in a closed state. The air is conducted through an open damper 11 to the radiator 12' on the outlet side of the heat recovery means and further to the second duct portion 18a. The morning heating damper 18 in the second duct portion is here in an open state. The air is then conducted to the radiator 12" on the inlet side of the heat recovery means, and forwarded through the damper 10, the heating radiator 6 and the cooling radiator 7 to the blower 8, which blows the air through the duct 9 back into the room space 1.

In the above manner, three counter-current radiators 12', 12" and 6 connected in series are employed in heating the air. If the temperature efficiency of the heat recovery means is 60% and the corresponding value for the heating radiator is 40% (both of which values are low), the efficiency of both heat recovery radiators separately is about 77% and when connected in series on a counter-current principle, above 96%. In other words, the temperature of the return water conducted from the radiator 12' is very close to the temperature of the air conducted to it, i.e. room temperature, and/or the temperature of the air conducted from the radiator 6 to the room space 1 is very close to the temperature of the inlet water.

Heat can be supplied to the radiators 12' and 12" e.g. in the following manner: the return water conducted from the radiator 6 is not conducted through the valve 13 to a return water pipe 15 but through a 2-mode valve 16 and a pipe 19 to a heat exchanger 17 arranged in the circuit for liquid circulation in the heat recovery system and further through the pipe 19 to the return water pipe 15. If the temperature of the return water is adjusted to be about 10°C higher than the temperature of the return water on the outlet side of the radiator 12', the heat exchanger is inexpensive and fairly small in size. The temperature of the return water is then below 30°C, if the room temperature is 16-19°C,

In normal use as a return air unit, the arrangement of Fig. 2 operates such that the morning heating damper 18 is closed and the heat supply to the heat exchanger 17 of the heat recovery means is interrupted. The proportions of inlet, outlet and return air are regulated by the dampers 5, 10 and 11 in the usual manner. If the unit is not operated by return air, dampers 5, 10 and 11 are not needed.

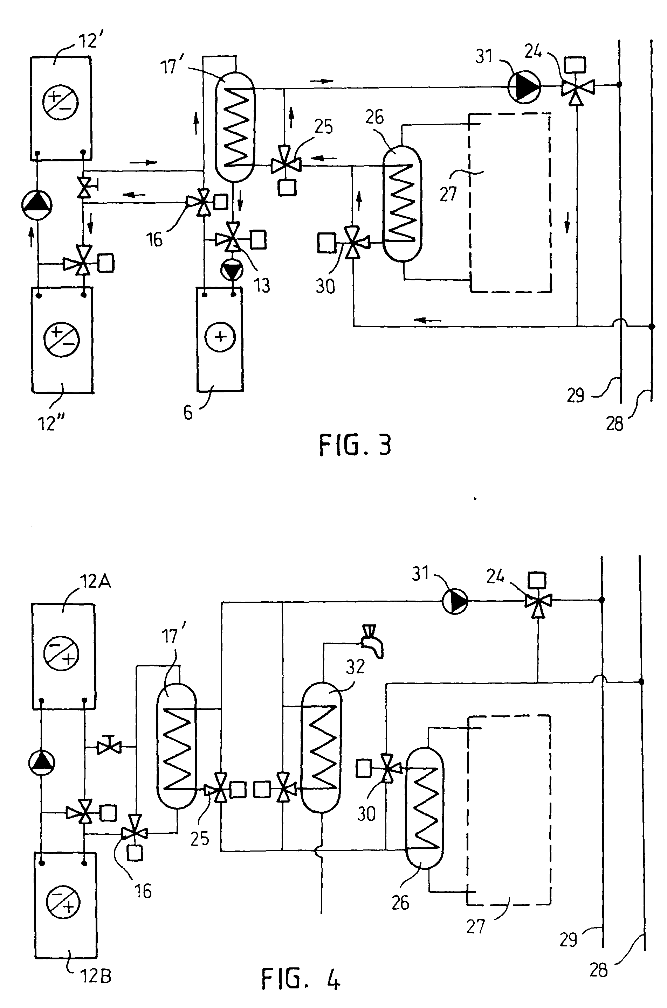

Fig. 3 shows a second advantageous embodiment of the arrangement according to the invention. Fig. 3 shows only the connections on the liquid side of the arrangement; otherwise the solution corresponds to the embodiment of Fig. 2.

The arrangement of Fig. 3 is more advantageous than that of Fig. 2 in some respects, since in the embodiment of Fig. 3 the heat recovery circuit does not comprise a separate heat exchanger 17 as the embodiment of Fig. 2 does. In the embodiment of Fig. 3 the heat recovery circuit is connected in series with the heating radiator 6, whereby the heating liquid conducted from the radiator 6 flows through the control valve 16 to the air inlet radiator 12" and further through the air outlet radiator 12' to the heat exchanger 17' of the air-conditioning system. The heat exchanger 17' is connected through a valve 25 in series with a heat exchanger 26 of the heating system by a valve 30. The heat exchanger 26 is connected to an inlet pipe 28 of the district heating, and heating water is conducted from the heat exchanger 17' through a pump 31 and a valve 24 to a return pipe 29.

As stated above, all the parts that are irrelevant to heat transfer and are similar to those shown in Fig. 2 have been omitted from Fig. 3. Further, the heating liquid piping is shown in Fig. 3 in a simplified form. Reference number 27 indicates an area representing the heating system of the building, the system optionally including parts connected in series and/or in parallel. Production of hot water may be part of the heating system 27, or it may have a separate heat exchanger which is connected in series or in parallel with the heat exchanger 17' or is an entirely separate unit. The heat exchanger 17' may naturally also serve several air-conditioning apparatuses connected in series or in parallel, or separate afterheating radiators or other radiators of the air-conditioning system. The system may comprise more than one heat exchanger 17' and/or 30 connected in parallel and/or in series.

In the embodiment of Fig. 3, a heat exchanger corresponding to the heat exchanger 17 of the embodiment of Fig. 2 is not needed. Further, the return water conducted from the district heating is about 10°C colder than in the embodiment of Fig. 2 since the return water conducted from the heat recovery means has a direct cooling effect on the district heating water. On the other hand, a non-freezing liquid, usually a mixture of water and glycol, flows through the heat exchanger 17', the radiator 6 and the piping, valves, etc. connecting them, setting further requirements for their structure.

Fig. 4 shows a third advantageous embodiment of the arrangement according to the invention. In Fig. 4, the same reference numbers are used as in Fig. 3 where appropriate. In the embodiment of Fig. 4, the heating, cooling and heat recovery radiators are combined to provide one heat exchanger 12A. Comparison of Figs. 3 and 4 shows that the advantage of the embodiment shown in Fig. 4 is that the piping and the control means are significantly simpler than in the embodiment of Fig. 3, and no backwater pump for a heating radiator is needed. Fig. 4 also shows connection of a heat exchanger 32 for hot water in parallel with the heat exchanger 17' of the air-conditioning system. The former heat exchanger may also in some cases be an entirely separate unit since when hot water is used, district heating water can easily be cooled to 20-25°C.

The above embodiments are not intended to restrict the invention in any way, but the invention can be modified quite freely within the scope of the attached claims. It is thus to be understood that the arrangement according to the invention need not necessarily be identical to what is shown in the Figs. but solutions of other kind are also possible. All air-conditioning arrangements and pipe, control and electric connections known per se are possible within the scope of the invention.

## Claims

1. A method for heating and cooling room space, wherein air is sucked from room space (1) and is conducted through a heating radiator (6) when heating is desired or a cooling radiator (7) when cooling is desired, and passing the heated or cooled air to an air blower (8) by which the heated or cooled air is blown back into the room space (1);
**characterized in that**
at least part of the air sucked from the room space (1) is first conducted through an air outlet radiator (12') or an air inlet radiator (12") of a heat recovery means or through both when connected in series, and is then passed to said heating and cooling radiators (6,7); and
that a heating or cooling power is supplied to a circuit for liquid circulation to and from said radiators of said heat recovery means.

2. An arrangement for heating and cooling room space, comprising blowers (4, 8) for sucking air from the room space (1) and for blowing the air into the room space, radiators (6, 7) for heating and cooling the air to be blown in, and a first duct portion (5a) for conducting the air sucked from the room space (1) to the heating and cooling radiators (6, 7) before it is conducted back into the room space (1), the amount of the air passing through said first duct portion (5a) being controllable by a return air damper (5) arranged in the duct portion (5a), and the arrangement further comprising a heat recovery means, which comprises heat recovery radiators (12', 12") on the outlet and inlet sides and dampers (10, 11, 22, 23), by which the flow of the outlet and inlet air through said radiators can be regulated, **characterised** in that the arrangement comprises a second duct portion (18a) arranged to connect the outlet of the heat recovery radiator (12') on the outlet side of the heat recovery means with the inlet of the heat recovery radiator (12'') on the inlet side, and to allow the air sucked from the room space (1), or at least part of the air, to flow through said heat recovery radiators (12',12'') in series before the air is conducted to the heating and cooling radiators (6, 7) for heating and cooling the air to be blown in, and that the second duct portion (18a) is provided with a morning heating damper (18), by which said duct (18a) can be closed if desired.

3. An arrangement according to claim 2, **characterised** in that the radiators (6, 7) for heating and cooling the air to be blown in and the heat recovery radiators (12', 12") are arranged to provide a single heat exchanger serving to provide heating and/or cooling and/or heat recovery.

4. An arrangement according to Claim 2 or Claim 3 of the preceding claims, **characterised** in that water flowing from the radiator (6) for heating the air to be blown in is arranged to be supplied to a heat exchanger (17) arranged in the circuit for liquid circulation in the heat recovery means and further to a return water pipe.

5. An arrangement according to any one of Claims 2 to 4, **characterised** in that the liquid circulation system of the radiator (6) for heating the air to be blown in is connected in series with the heat recovery means (12', 12"), and that a heat exchanger (17') generating heat for said connection is connected in series with a heat exchanger (26) of the heating system (27) that heats the room space (1).

6. An arrangement according to Claim 5, **characterised** in that a heat exchanger (32) producing hot water is connected in parallel with the heat exchanger (17') supplying heat to the air-conditioning circuit.

7. An arrangement according to claim 6, **characterised** in that the hot water heat exchanger (32) is directly connectable to a district heating network or to some other source of heat as a separate unit.

8. An arrangement according to any one of Claims 5 to 7, **characterised** in that heating liquid carrying heat from the cooling apparatuses or other waste heat source is arranged to be supplied to the inlet pipe of the liquid circulation system of the heat exchanger (17') supplying heat to the air heating circuit.

## Patentansprüche

1. Ein Verfahren zum Erwärmen und Kühlen von Räumen, worin Luft aus den Räumen (1) angesaugt und durch einen Wärme-Radiator (6) geleitet wird, wenn Erwärmung gewünscht wird, oder durch einen Kühl-Radiator (7), wenn Kühlung gewünscht wird, und Weiterführen der erwärmten oder gekühlten Luft zu einem Luftgebläse (8), durch das die erwärmte oder gekühlte Luft in die Räume (1) zurückgeblasen wird;
**dadurch gekennzeichnet, daß**
mindestens ein Teil der aus den Räumen (1) angesaugten Luft zuerst durch einen Luftauslaß-Radiator (12') oder einen Lufteinlaß-Radiator (12'') eines Wärmerückgewinnungsmittels oder durch beide hindurch geleitet wird, wenn sie in Serie geschaltet sind, und die Luft dann zu den Wärme- und Kühlradiatoren (6, 7) geleitet wird; und
daß eine Heiz- oder Kühlleistung zu einem Kreislauf für Flüssigkeitszirkulation zu und von den Radiatoren der Wärmerückgewinnungsmitteln geliefert wird.

2. Eine Vorrichtung zum Erwärmen und Kühlen von Räumen, umfassend Gebläse (4, 8), um Luft aus den Räumen (1) anzusaugen und um Luft in die Räume zu blasen; Radiatoren (6, 7) für die Erwärmung und Kühlung der einzublasenden Luft; und einen ersten Kanalabschnitt (5a), um die aus den Räumen (1) angesaugte Luft zu den Wärme- und Kühl-Radiatoren (6, 7) zu leiten, bevor sie in die Räume (1) zurückgeleitet wird; wobei die Menge der Luft, die durch den ersten Kanalabschnitt (5a) hindurchströmt und durch eine Luftrückleitungsdrossel (5) kontrollierbar ist, die in dem Kanalabschnitt (5a) angeordnet ist; und die Vorrichtung des weiteren umfassend ein Wärmerückgewinnungsmittel, das auf den Auslaß- und Einlaßseiten Wärmerückgewinnungs-Radiatoren (12', 12") und Drosseln (10, 11, 22, 23) umfaßt, durch die die Auslaß- und Einlaßluft durch die Radiatoren hindurch reguliert werden kann,
**dadurch gekennzeichnet, daß**
die Vorrichtung einen zweiten Kanalabschnitt (18a) umfaßt, der angeordnet ist, um den Auslaß des Wärmerückgewinnungs-Radiators (12') auf der Auslaßseite der Wärmerückgewinnungsmittel mit dem Einlaß des Wärmerückgewinnungs-Radiators (12'') auf der Einlaßseite zu verbinden, und um es der aus den Räumen (1) angesaugten Luft, oder wenigstens einem Teil der Luft, zu erlauben, nacheinander durch die Wärmerückgewinnungsradiatoren (12', 12") zu strömen, bevor die Luft zu den Wärme- und Kühl-Radiatoren (6, 7) für die Erwärmung und Kühlung der einzublasenden Luft geleitet wird, und daß der zweite Kanalabschnitt (18a) mit einer Drossel für Morgenwärme (18), durch die der Kanal (18a), falls gewünscht, geschlossen werden kann, versehen ist.

3. Eine Vorrichtung gemäß Patentanspruch 2, dadurch gekennzeichnet, daß die Radiatoren (6, 7) für die Erwärmung und Kühlung der einzublasenden Luft und die Wärmerückgewinnungs-Radiatoren (12', 12") angeordnet sind, um einen einzelnen Wärmetauscher zu schaffen, der dazu dient, Erwärmung und/oder Kühlung und /oder Wärmerückgewinnung zu schaffen.

4. Eine Vorrichtung gemäß einem beliebigen der Patentansprüche 2 oder 3, dadurch gekennzeichnet, daß aus dem Radiator (6) für die Erwärmung und Kühlung der einzublasenden Luft strömendes Wasser dazu vorgesehen ist, um zu einem Wärmetauscher (17) geliefert zu werden, der angeordnet ist in dem Kreislauf für Flüssigkeitszirkulation in den Wärmerückgewinnungsmitteln und weiter zu einem Wasserrückleitungsrohr.

5. Eine Vorrichtung gemäß einem beliebigen der Patentansprüche 2 bis 4, dadurch gekennzeichnet, daß das Flüssigkeitszirkulationssystem des Radiators (6) für Erwärmung der einzublasenden Luft mit den Wärmerückgewinnungsmitteln (12', 12") in Serie geschaltet ist, und daß ein Wärmetauscher (17'), der Wärme für diese Verbindung erzeugt, mit einem Wärmetauscher (26) des Heizsystems (27), das die Räume (1) beheizt, in Serie geschaltet ist.

6. Eine Vorrichtung gemäß Patentanspruch 5, dadurch gekennzeichnet, daß ein Wärmetauscher (32), der heißes Wasser erzeugt, mit dem Wärmetauscher (17') für die Wärmelieferung zu dem Klimatisierungskreislauf parallel geschaltet ist.

7. Eine Vorrichtung gemäß Patentanspruch 6, dadurch gekennzeichnet, daß der Heißwasserwärmetauscher (32) als eine separate Einheit direkt mit einem Fernheizungsnetzwerk oder mit einigen anderen Wärmequellen verbindbar ist.

8. Eine Vorrichtung gemäß einem beliebigen der Patentansprüche 5 bis 7, dadurch gekennzeichnet, daß die erwärmte Flüssigkeit, die Wärme aus dem Kühlapparat oder einer anderen Abhitzequelle mit sich führt, angeordnet ist, um zu dem Einlaßrohr des Flüssigkeitszirkulationssystem des Wärmetauschers (17') geliefert zu werden, und um Wärme an den Lufterwärmungskreislauf zu liefern.

## Revendications

1. Procédé de chauffage et de refroidissement de l'espace d'une salle, dans lequel de l'air est aspiré de l'espace (1) de la salle et est conduit à travers un radiateur (6) de chauffage, lorsqu'un chauffage est voulu, ou un radiateur de refroidissement (7), lorsqu'un refroidissement est voulu, et de circulation de l'air chauffé ou refroidi vers un ventilateur (8) grâce auquel l'air chauffé ou refroidi est renvoyé dans l'espace (1) de la salle,
caractérisé en ce que
une partie au moins de l'air aspiré dans l'espace (1) de la salle est d'abord conduit dans un radiateur (12') de sortie d'air ou un radiateur (12") d'entrée d'air d'un dispositif de récupération de chaleur ou dans les deux lorsqu'ils sont raccordés en série, puis passe vers les radiateurs de chauffage et de refroidissement (6, 7), et
la puissance de chauffage ou de refroidissement est transmise à un circuit de circulation de liquide transmis aux radiateurs du dispositif de récupération de chaleur et récupéré à partir de ces radiateurs.

2. Ensemble de chauffage et de refroidissement de l'espace d'une salle, comprenant des ventilateurs (4, 8) destinés à aspirer de l'air de l'espace (1) de la salle et à souffler l'air dans l'espace de la salle, des radiateurs (6, 7) de chauffage et de refroidissement de l'air qui doit être soufflé vers les radiateurs de chauffage et de refroidissement (6, 7) et une première partie de conduit (5a) destinée à conduire l'air aspiré de l'espace (1) de la salle vers ces radiateurs avant que l'air ne soit renvoyé à l'espace (1) de la salle, la quantité d'air circulant dans la première partie de conduit (5a) pouvant être réglée par un registre (5) d'air renvoyé placé dans la partie de conduit (5a), et l'ensemble comportant en outre un dispositif de récupération de chaleur qui comprend des radiateurs (12', 12") de récupération de chaleur placés sur les côtés de sortie et d'entrée et des registres (10, 11, 22, 23) grâce auxquels l'écoulement de l'air d'entrée et de sortie peut être régulé dans les radiateurs, caractérisé en ce que l'ensemble comprend une seconde partie de conduit (18a) disposée afin qu'elle raccorde la sortie du radiateur de récupération de chaleur (12') au côté de sortie du dispositif de récupération de chaleur alors que l'entrée du radiateur de récupération de chaleur (12") se trouve du côté d'entrée, et permette à l'air aspiré de l'espace (1) de la salle ou à une partie au moins de cet air de circuler dans les radiateurs de récupération de chaleur (12', 12") en série avant que l'air ne soit conduit au radiateur de chauffage et de refroidissement (6, 7) afin que l'air qui doit être soufflé soit chauffé et refroidi, et en ce que la seconde partie de conduit (18a) a un registre (18) de chauffage du matin grâce auquel le conduit (18a) peut être fermé le cas échéant.

3. Ensemble selon la revendication 2, caractérisé en ce que les radiateurs (6, 7) de chauffage et de refroidissement de l'air à souffler et les radiateurs (12', 12") de récupération de chaleur sont disposés afin qu'ils forment un seul échangeur de chaleur utilisé pour assurer le chauffage et/ou le refroidissement et/ou la récupération de chaleur.

4. Ensemble selon la revendication 2 ou 3 parmi les revendications précédentes, caractérisé en ce que l'eau qui circule à partir du radiateur (6) de chauffage de l'air à souffler est disposée afin qu'elle soit transmise à un échangeur de chaleur (17) placé dans le circuit pour la circulation du liquide dans le dispositif de récupération de chaleur puis vers une conduite de retour d'eau.

5. Ensemble selon l'une quelconque des revendications 2 à 4, caractérisé en ce que le circuit de circulation de liquide du radiateur (6) de chauffage de l'air à souffler est raccordé en série au dispositif de récupération de chaleur (12', 12"), et un échangeur de chaleur (17') qui crée de la chaleur à cet effet est raccordé en série avec un échangeur de chaleur (26) du système de chauffage (27) qui chauffe l'espace (1) de la salle.

6. Ensemble selon la revendication 5, caractérisé en ce qu'un échangeur de chaleur (32) qui produit de l'eau chaude est raccordé en parallèle à l'échangeur de chaleur (17') qui transmet de la chaleur au circuit de conditionnement d'air.

7. Ensemble selon la revendication 6, caractérisé en ce que l'échangeur de chaleur (32) d'eau chaude peut être directement raccordé à un réseau de chauffage urbain ou à une autre source de chaleur sous forme d'une unité séparée.

8. Ensemble selon l'une quelconque des revendications 5 à 7, caractérisé en ce que le liquide de chauffage qui transporte de la chaleur à partir des appareils de refroidissement ou d'une autre source de chaleur usée est disposé afin qu'il soit transmis à la conduite d'entrée du circuit de circulation de liquide de l'échangeur de chaleur (17') qui transmet de la chaleur au circuit de chauffage d'air.
